Europäisches Patentamt

**European Patent Office**

Office européen des brevets

(11) Publication number: **0 492 739 B1**

## EUROPEAN PATENT SPECIFICATION

(45) Date of publication of patent specification: **04.10.95**

(51) Int. Cl.⁶: **G01P 9/04**, G01C 19/56, G01P 3/44

(21) Application number: **91203396.6**

(22) Date of filing: **23.12.91**

(54) **Piezo-electric rate sensors.**

(30) Priority: **22.12.90 GB 9027992**

(43) Date of publication of application:
**01.07.92 Bulletin 92/27**

(45) Publication of the grant of the patent:
**04.10.95 Bulletin 95/40**

(84) Designated Contracting States:
**DE FR GB IT**

(56) References cited:
**EP-A- 0 153 189**
**EP-A- 0 411 849**
**GB-A- 2 061 502**

**IEEE POSITION LOCATION AND NAVIGATION SYMPOSIUM, Las Vegas, 20-23 March 1990; D.G. Harris : "A broad application spectrum gyro for the 1990's", pp. 21-28, XP163761**

(73) Proprietor: **BRITISH AEROSPACE PUBLIC LIMITED COMPANY**
**Warwick House,**
**P.O. Box 87,**
**Farnborough Aerospace Centre**
**Farnborough,**
**Hants. GU14 6YU (GB)**

(72) Inventor: **Varnham, Malcolm P., British Aerospace Systems and**
**Equipment Ltd.,**
**P.O. Box 55,**
**Gunnelswood Road**
**Stevenage,**
**Herts SG1 2DB (GB)**
Inventor: **Norris, Timothy S., British Aerospace Systems and**
**Equipment Ltd.,**
**P.O. Box 55,**
**Gunnelswood Road**
**Stevenage,**
**Herts SG1 2DB (GB)**
Inventor: **McInnes, James, British Aerospace Systems and**
**Equipment Ltd.,**
**P.O. Box 55,**
**Gunnelswood Road**
**Stevenage,**
**Herts SG1 2DB (GB)**
Inventor: **Hodgins, Diana**
**2 Marfed Road,**
**Wheathampstead**
**St Albans,**
**Herts AL4 8AS (GB)**

(74) Representative: **Rooney, Paul Blaise et al**
**British Aerospace plc,**
**Corporate Intellectual Property Department,**
**Park East, PO Box 87, Farnborough Aero-**
**space Centre**
**Farnborough, Hants GU14 6YU (GB)**

## Description

The present invention relates to piezo-electric rate sensors and relates particularly, but not exclusively, to a method of and apparatus for determining the scale factor for piezo-electric rate sensors.

There are currently a number of piezo-electric vibrating rate sensors being produced for different applications. Generally, the vibrating portion of the sensor is made from a man made material whose properties vary with both temperature and time. These variations manifest themselves as scale factor variations which results in a difference between the indicated rate and the actual rate and makes them unsuitable for many applications.

One method of avoiding the above mentioned problem is to monitor the temperature and time and compensate the output of the rate sensor with a scale factor. Unfortunately, the material properties of the sensors are not exactly reproducible from batch to batch and hence differing variations in the rate sensor and thus the scale factor still present themselves.

EP-A-0153189 discloses a gyroscopic device having a circular outline piezo-electric resonator excited into vibration via electrodes, with the vibration being monitored and its amplitude maintained substantially constant. Although an oscillator circuit is provided with active gain control, there is no appreciation of using gain control to overcome variation of the quality factor Q with temperature nor of using scale factor variation of the resonator for scale factor compensation.

GB-A-2061502 discloses a rotational movement detection sensor having a cup shaped resonator excited into vibration via transducers, with the vibration being monitored and its amplitude maintained substantially constant. Although automatic gain control is provided in a phase locked loop to enable the calibration factor of the sensor to be stabilised there is no appreciated of its relationship to the quality factor Q.

There therefore exists a requirement for a method of and apparatus for obtaining the value of those parameters of a piezo-electric rate sensor which vary with both temperature and time so as to enable scale factor variation to be determined for scale factor compensation to be achieved and hence ensure the accuracy of the sensor.

Accordingly, the present invention provides a method for determining the scale factor of a piezo-electric rate sensor for scale factor compensation, including the steps of activating a vibration means to stimulate the vibration of a vibratable structure at a primary drive point thereon; monitoring the magnitude of vibration at the primary pick-off point on said structure; comparing the magnitude of vibration at the primary pick-off point with a reference value; and varying the magnitude of vibration at the primary drive point to maintain the magnitude of vibration at the primary pick-off point substantially constant, characterised by measuring a natural resonant frequency (Wn) of said vibratable structure, monitoring a drive current and a drive voltage amplitude to said vibration means at resonance, determining a power input to said vibratable structure at resonance from said monitored drive current and drive voltage at said natural resonant frequency (Wn), determining the Q factor (Q) of the vibrating structure using said power input at resonance, determining the piezo-electric charge coefficient ($\beta$) of the vibrating structure, determining the scale factor using said Q factor (Q) and piezo-electric charge coefficient ($\beta$), measuring the magnitude of a secondary mode of vibration and utilising the scale factor and the magnitude of a secondary mode of vibration to determine the turning rate of the sensor.

By maintaining the magnitude of vibration at the primary pick-off point substantially constant it is possible to determine the value of the piezo-electric charge coefficient for the vibrating structure, which varies with temperature, and hence facilitate the determination of the scale factor compensation which must be applied to the sensor readings in order to obtain accurate results therefrom.

Preferably, the magnitude of vibration at the primary pick-off point is monitored by monitoring the amplitude of a voltage signal in a vibration monitoring means.

Conveniently, the signal voltage amplitude in the vibration monitoring means is compared with a predetermined voltage as said reference value.

Preferably, the output of the vibration means is varied by altering the voltage amplitude of the voltage of a signal supplied to the vibration means at the primary drive point.

Advantageously the scale factor of the sensor is determined using the following equation:

$$\text{Scale Factor} = S_p/\Omega = A\, P_d\, \beta_{11}\, \beta_{14}\, (Q/Wn)^2 k$$

Where A and k are constants, Sp is the magnitude of secondary mode of vibration, $\Omega$ is the applied turning rate, $P_d$ is the drive voltage amplitude, Q is the Q factor of the vibrating structure, $W_n$ is the natural resonant frequency and $\beta_{11}$ and $\beta_{14}$ are the piezo-electric charge coefficients at electrodes 11 and 14 respectively.

According to a second aspect of the present invention, there is provided a piezo-electric vibrating rate sensor comprising:

vibration means, for vibrating said rate sensor at a primary drive point thereon;

vibration monitoring means, for monitoring a magnitude of vibration at a primary pick-off point on said structure; and

amplitude maintaining means adapted to vary the magnitude of vibration at the primary drive point so as to maintain the amplitude of vibration at said primary pick-off point substantially constant,

characterised by the provision of

natural resonant frequency measuring means for measuring a natural resonant frequency of said vibrating structure;

primary drive electrode current measuring means for monitoring a drive current to said primary drive electrode at resonance;

primary drive electrode voltage measuring means for monitoring a drive voltage to said primary drive electrode at resonance;

power input determining means for determining input power at resonance from the measured primary drive electrode current and voltage at said natural resonance frequency;

means for determining the Q factor of the vibrating structure from said input power at resonance;

means for determining the piezo-electric charge coefficient ($\beta$) of the vibrating structure;

scale factor determining means for determining the scale factor varying with temperature and time about a calibrated value using said Q factor and piezo-electric charge coefficient;

means for measuring the magnitude of a secondary mode of vibration, and

means utilising the scale factor and the magnitude of a secondary mode of vibration for determining the turning rate of the sensor.

Preferably, the amplitude maintaining means comprises an amplitude detection means for detecting the amplitude of the vibration at the primary pick-off point, comparator means for comparing the detected amplitude with a reference amplitude value and means for varying the output of the vibration means to vary the magnitude of vibration at the primary drive point in order to maintain the magnitude of vibration at the primary pick-off point substantially constant.

Advantageously, the amplitude detection means comprises voltage measuring means for measuring an output from the vibration monitoring means, the reference amplitude value is a voltage value, the comparator comprises a means for comparing an output from the vibration monitoring means to the reference amplitude value and the means for varying the output of the vibration means comprises means for varying an amplitude bearing voltage passed to the vibration means.

Conveniently, the means for varying the amplitude bearing voltage signal passed to the vibration means comprises a gain control device.

The present invention will now be more particularly described by way of example only with reference to the accompanying drawings in which,

Figure 1 is a diagrammatic representation of the primary mode vibration pattern in a piezo-electric rate sensor,

Figure 2, is a diagrammatic representation of the secondary mode vibration pattern in a piezo-electric rate sensor,

Figure 3, is a schematic representation of a thin shell vibrating rate sensor in its steady state and operating at a carrier frequency of Wn where Wn is the natural resonant frequency of the sensor resonator, and

Figure 4 is a schematic representation of a piezo-electric rate sensor incorporating a method of and apparatus for scale factor variation according to the present invention.

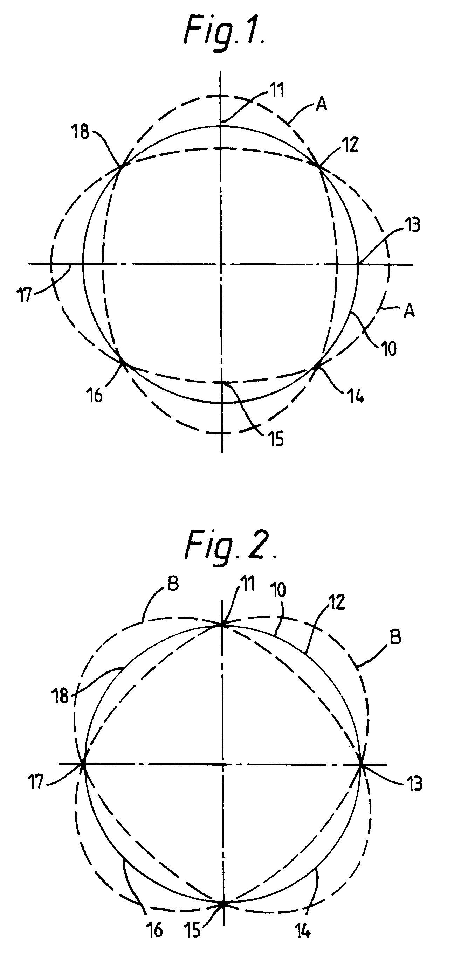

Referring to Figures 1, 2 and 3, a steady-state thin shell vibrating rate sensor detects sensor turning rates in a manner well known to those skilled in the art and therefore not described in detail herein. However, in brief, the sensor is operated by stimulating a primary mode of vibration (Figure 1) and detecting a turning rate of the structure about its axis by monitoring the magnitude of the secondary mode vibration pattern (Figure 2).

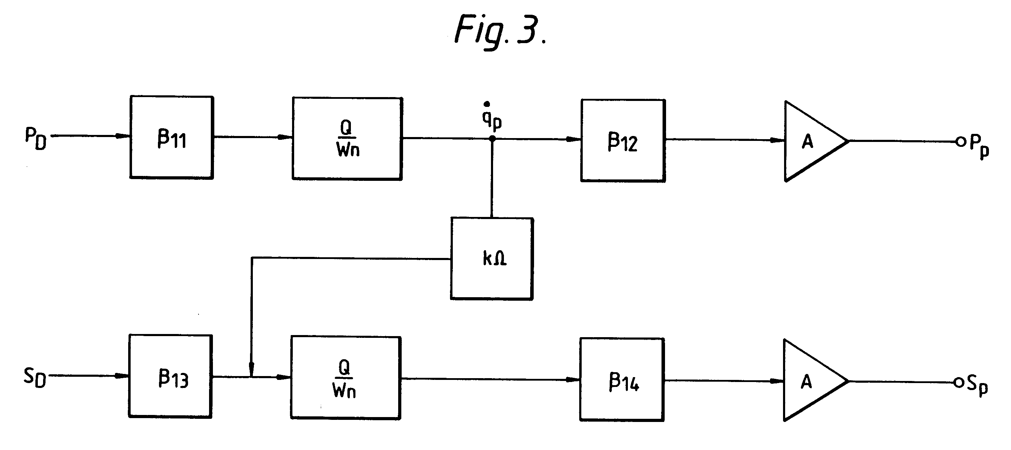

Figure 3 illustrates the steady-state primary and secondary mode signals at a vibrating carrier frequency Wn of the sensor. $P_d$ and $P_p$ represents the input and output levels for the primary mode whereas $S_d$ and $S_p$ represent the input and output for the secondary mode from which the rate of turn of the structure about the axis is determined. $\beta$ is the piezo-electric charge coefficient concerned with mechanical transducing to the resonator, Q is the resonator Q-factor of resonance around the operational frequency $W_n$. $\Omega$ is the applied turning rate, k is a constant associated with the form of the resonator and variable $\dot{q}_p$ is the primary mode vibration velocity which is linked by the rate related coriolis force to the secondary mode.

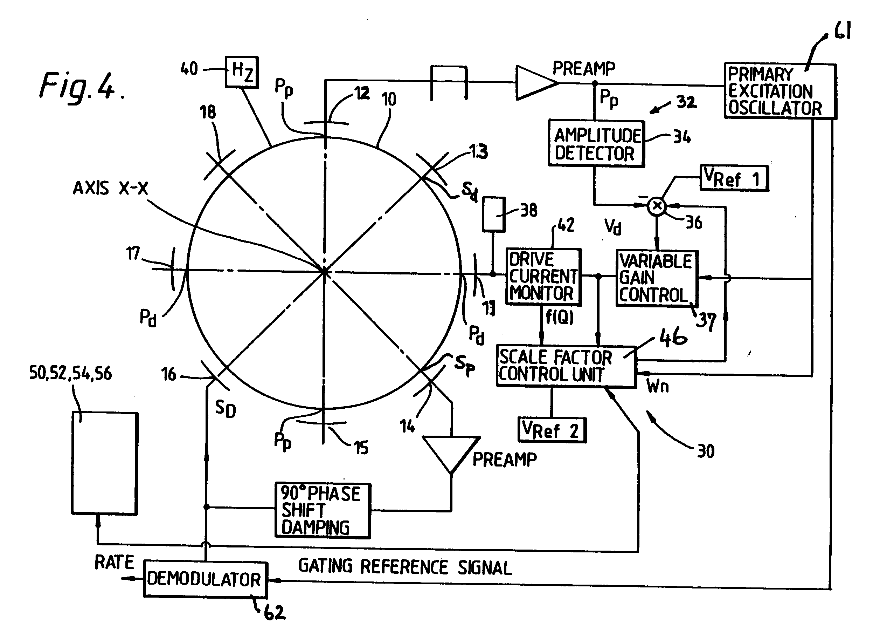

An apparatus of the invention for determining scale factor variation for a piezo-electric rate sensor for scale factor compensation is shown in Figure 4 in closed loop gyroscope configuration. The technique can also be applied to an open loop gyroscope where $S_d$ is set to be zero.

Referring to Figure 4, a primary mode of vibration is set up in a vibrating structure 10 by energising force electrodes 11 and 17 respectively to establish a double elliptical vibration pattern as shown at A in Figure 1. The magnitude of the primary mode of vibration is detected by detecting electrodes 12 and 15 positioned orthogonal to electrodes 11 and 17 at what is referred to as the primary pick-off point. When the sensor is rotated about axis x-x the direction of the vibrating mode lags behind the vibrating structure 10 and this lagging behind corresponds to the excitation of a secondary mode of vibration having double elliptical vibration pattern as shown at B in Figure 2. The amplitude of the second mode is measured by using appropriate pairs of detector electrodes 14 and 18 respectively. The amplitude of this signal, when demodulated by the demodulator 62 with respect to the output of oscillator 61 is used as a measure of the rotation rate that is applied to the sensor.

Variations in the properties of the vibrating structure which vary with both temperature and time manifest themselves as scale factor variations which mean that a difference will exist between the indicated rate, as determined by demodulating the output signal from the secondary mode of vibration, and the actual rate. These variations mean that such sensors are unsuitable for many applications in which high degrees of accuracy are required. The present invention attempts to solve the problem by providing a method of and apparatus for determining the scale factor such that the accuracy of piezo-electric rate sensors and the like can be improved thereby to enable such sensors to be used in applications they were previously considered unsuitable for. The properties of the vibrating structure which vary with time and/or temperature are $\beta$ - the piezo-electric charge coefficient concerned with mechanical transducing to the resonator, Q the resonator Q factor of resonance around the operational frequency and Wn the natural resonant frequency of the vibrating structure. As the scale factor value is dependent upon the value of each and every one of these variables it is normally impossible to accurately determine the scale factor value and hence impossible to accurately compensate for the variations in the demodulated output caused by said variables.

In the present invention, there is provided a method of and apparatus for determination of scale factor of a piezo-electric rate sensor. The apparatus comprises scale factor determination means shown generally at 30 in Figure 4.

In detail the means 30 comprises vibration means in the form of excitation electrodes 11, 17 for vibrating a vibrating structure 10 at a primary drive point $P_d$ thereon, vibration monitoring means in the form of detector electrodes 12, 15 for monitoring the magnitude of vibration at a primary pick-off point $P_p$ thereon and amplitude maintaining means shown generally at 32 for maintaining the amplitude of vibration at the primary pick-off point substantially constant. The amplitude maintaining means 32 comprises an amplitude detection means in the form of a voltage detection means 34 for measuring the voltage from the vibration monitoring means detector electrodes 12, 15, comparator means 36 for comparing the detected amplitude of vibration represented by a voltage level with a reference amplitude voltage level in the form of voltage V ref 1, and a gain control device 37 for varying the signal voltage amplitude passed to the vibration means excitation electrodes 11, 17 in accordance with a difference signal $V_d$ passed from the comparator means 36 to maintain the magnitude of vibration as monitored at the primary pick-off point $P_p$ constant.

By maintaining the magnitude of vibration at the primary pick-off point $P_p$ constant it is possible to determine the value of one of the variables, namely, the product of piezo-electric charge coefficient $\beta_{12} \times \beta_{11}$ of the vibrating structure from the following equation:

$$P_d = (K_d \; Vref \; 1 \; W_n)/ (A \; \beta_{12} \; \beta_{11} \; Q) \qquad (1)$$

in which $P_d$ is the drive voltage amplitude which may be monitored by drive voltage measuring means 38; $K_d$ is a constant, Vref 1 is the value of the predetermined reference voltage; $W_n$ is the frequency of vibration of the vibrating structure measured by frequency measuring means 40; A is a second constant; $\beta_{12}$ is the piezo-electric charge coefficient of the vibrating structure at electrode 12 which for a uniform vibrating structure is substantially equal to that at electrode 11, and Q is the Q factor of the vibrating structure which may be determined from the power loss from the vibrating structure 10 at resonance and hence can be calculated from $P_d \cdot i_d$, i.e. from the drive voltage amplitude $P_d$ and the drive current $i_d$ which can be monitored by drive current monitor 42.

It should be noted that by adopting this approach, the Q factor can be determined whilst the sensor is in operation without interrupting the sensor operation. A method of in process monitoring of the Q factor is therefore provided. The Q factor is in fact known to vary considerably with temperature for a number of sintered man-made piezo-electric materials and hence adoption of this process will significantly increase the accuracy of scale factor determination which is outlined below.

It will be appreciated that in this configuration, drive voltage amplitude at the primary pick-off point $P_p$ is stabilised to have a constant amplitude such that

$$P_p = kd \; Vref \; 1 \qquad (2)$$

and

$$\dot{q}_p = (kd \; Vref \; 1)/ (A \; \beta) \qquad (3)$$

Where $\dot{q}_p$ = the magnitude of the movement which gives rise to the coriolis effect in the sensor.

By modifying the primary pick-off level the overall scale factor is also desensitised to changes

in the $\beta$ and Wn. This approach is applicable to both open and closed loop vibrating structure rate sensors.

The scale factor SF of the vibrating rate sensor may be determined from the following equation:

$$SF = S_p/\Omega = A\,P_d\,\beta_{11}\,\beta_{14}\,(Q/Wn)^2\,k \qquad (4)$$

Where Sp = the magnitude of the secondary mode of vibration and can be determined by monitoring the voltage at output electrode 18 with a secondary mode vibration output measuring means (14, 18); $\Omega$ is the applied turning rate and may be measured by an applied turning rate measuring means and $\beta_{11}\,\beta_{14}$ is substantially equal to $\beta12$ $\beta11$ as determined above.

Thus in the method of the invention the natural resonant frequency $W_n$ of the structure 10 is measured and the drive current $i_d$ and drive voltage to the vibration means (11, 17) monitored. The drive current $i_d$ and drive voltage are used to determine a power input to the structure 10 at the natural resonant frequency $W_n$ and the power input used to determine the Q factor (Q) of the structure 10.

The piezo-electric charge coefficient $\beta$ is determined using equation (1) and the Q factor and piezo-electric charge coefficient $\beta$ are used in equation (4) to determine the scale factor. The scale factor is then utilised for determining the turning rate of the sensor.

Determination of the scale factor by this method of the present invention enables correction of the sensor output to be made by the scale factor control unit 46 in order to ensure that the output therefrom more accurately reflects the true turning rate of the sensor, thereby enabling such sensors to be employed in applications requiring a higher degree of accuracy than they were previously able to provide.

Separate means shown schematically at 50 to 56 include means 50 for determining the power input at resonance; means 52 for determining the Q factor of the vibrating structure; means 54 for determining the piezo-electric charge coefficient $\beta$; and means 56 for determining the applied turning rate.

## Claims

1. A method for determining the scale factor of a piezo-electric rate sensor for scale factor compensation, including the steps of activating a vibration means (11, 17) so as to stimulate the vibration of a vibratable structure (10) at a primary drive point ($P_d$) thereon; monitoring the magnitude of vibration at the primary pick-off point ($P_p$) on said structure (10); comparing the magnitude of vibration at the primary pick-off point ($P_p$) with a reference value (Vref1); and varying the magnitude of vibration at the primary drive point ($P_d$) in order to maintain the magnitude of vibration at the primary pick-off point ($P_p$) substantially constant,

characterised by measuring a natural resonant frequency ($W_n$) of said vibratable structure (10), monitoring a drive current ($i_d$) and a drive voltage amplitude ($P_d$) to said vibration means (11, 17) at resonance, determining a power input to said vibratable structure (10) at resonance from said monitored drive current ($i_d$) and drive voltage amplitude ($P_d$) at said natural resonant frequency ($W_n$), determining the Q factor (Q) of the vibrating structure (10) using said power input at resonance, determining the piezo-electric charge coefficient ($\beta$) of the vibrating structure (10), determining the scale factor using said Q factor (Q) and piezo-electric charge coefficient (b),

measuring the magnitude of a secondary mode of vibration ($S_p$), and

utilising the scale factor and the magnitude of a secondary mode of vibration ($S_p$) to determine the turning rate ($\Omega$) of the sensor.

2. A method as claimed in claim 1, in which the magnitude of vibration at the primary pick-off point ($P_p$) is monitored by monitoring the signal voltage amplitude in a vibration monitoring means (12, 15).

3. A method according to claim 2, in which the signal voltage amplitude in the vibration monitoring means (12, 15) is compared with a predetermined voltage (VRef1) as said reference value.

4. A method according to claim 3, in which the magnitude of vibration at the primary drive point is varied by altering the voltage amplitude of the signal supplied to the vibration means (11, 17) at the primary drive point.

5. A method as claimed in claim 1, including the step of determining the scale factor (SF) of the sensor using the following equation:

$$\text{Scale factor} = S_p/\Omega = AP_d\,\beta_{11}\,\beta_{14}\,(Q/Wn)^2 k$$

Where A and k are constants, Sp is the magnitude of secondary mode of vibration, $\Omega$ is the applied turning rate, $P_d$ is the drive voltage amplitude, Q is the Q factor of the vibrating structure (10), $W_n$ is the natural resonant frequency, and $\beta_{11}$ and $\beta_{14}$ are the piezo-electric charge coefficients at electrodes 11 and 14 respectively.

**6.** A piezo-electric vibrating rate sensor comprising:

a vibration structure (10):

vibration means (11, 17) for vibrating said structure (10) at a primary drive point ($P_d$) thereon;

vibration monitoring means (12, 15), for monitoring a magnitude of vibration at a primary pick-off point ($P_p$) on said rate structure (10), and

amplitude maintaining means (32) adapted to vary the magnitude of vibration at the primary drive point so as to maintain an amplitude of vibration at said primary pick-off point ($P_p$) substantially constant, characterised by the provision of

natural resonant frequency measuring means (40) for measuring a natural resonant frequency ($W_n$) of said structure (10);

primary drive electrode current measuring means for monitoring a drive current ($i_d$) to said vibration means primary drive electrodes (11, 17) at resonance;

primary drive electrode voltage measuring means (38) for monitoring a drive voltage amplitude ($P_d$) to said vibration means primary drive electrodes (11,17) at resonance;

power input determining means (50) for determining input power at resonance from the measured primary drive electrode current ($i_d$) and voltage amplitude ($P_d$) at said natural resonance frequency ($W_n$)

means (52) for determining the Q factor of the vibrating structure (10) from said input power at resonance;

means (54) for determining the piezo-electric charge coefficient ($\beta$) of the vibrating structure (10),

scale factor determining means for determining the scale factor varying with temperature and time using said Q factor and piezo-electric charge coefficient ($\beta$),

means for measuring the magnitude of a secondary mode of vibration, and

means utilising the scale factor and the magnitude of a secondary mode of vibration for determining the turning rate ($\Omega$) of the sensor.

**7.** A piezo-electric vibrating rate sensor as claimed in claim 8 or claim 9, in which the amplitude maintaining means (32) comprises an amplitude detection means (34) for detecting the amplitude of the vibration at the primary pick-off point ($P_p$), comparator means (36) for comparing the detected amplitude with a reference amplitude value (Vref1) and means (37) for varying the output of the vibration means (11, 17) so as to vary the magnitude of vibration at the primary drive point ($P_d$) in order to maintain the magnitude of vibration at the primary pick-off point ($P_p$) substantially constant.

**8.** A piezo-electric vibrating rate sensor as claimed in claim 10, in which the amplitude detection means (34) comprises voltage measuring means for measuring the voltage in the vibration monitoring means (12, 15), the reference amplitude value (Vref1) is a voltage value, the comparator means (36) comprises a means for comparing the voltage in the vibration monitoring means (12, 15) and the reference voltage (Vref1) and the means (37) for varying the output of the vibration means (11, 17) comprises means for varying the signal voltage signal passed to the vibration means.

**9.** A piezo-electric vibrating rate sensor as claimed in claim 11, in which the means (37) for varying the signal voltage amplitude passed to the vibration means (11, 17) comprises a gain control device.

**Patentansprüche**

**1.** Verfahren zur Bestimmung des Skalierungsfaktors eines piezo-elektrischen Drehratensensors zum Zwecke der Skalierungsfaktor-Kompensation mit den folgenden Schritten: es wird eine Vibrationseinrichtung (11, 17) derart aktiviert, daß die Vibration eines vibrationsfähigen Aufbaus (10) an einem primären Treiberpunkt ($P_d$) hiervon angeregt wird; es wird die Vibrationsgröße am primären Abnahmepunkt ($P_p$) des Aufbaus (10) überwacht; es wird die Größe der Vibration am Primärabnahmepunkt ($P_p$) mit einem Bezugswert (Vref1) verglichen; und es wird die Größe der Vibration am primären Treiberpunkt ($P_d$) verändert, um die Größe der Vibration an dem Primärabnahmepunkt ($P_p$) im wesentlichen konstant zu halten, gekennzeichnet durch die folgenden Schritte: es wird eine natürliche Resonanzfrequenz ($W_n$) des vibrationsfähigen Aufbaus (10) gemessen; es wird eine Treiberstromamplitude ($i_d$) und eine Treiberspannungsamplitude ($P_d$) nach der Vibrationseinrichtung (11, 17) bei Resonanz überwacht; es wird ein Leistungseingang nach dem vibrationsfähigen Aufbau (10) bei Resonanz aus der überwachten Treiberstromamplitude ($i_d$) und Treiberspannungsamplitude ($P_d$) bei der natürlichen Resonanzfrequenz ($W_n$) bestimmt; es wird der Gütefaktor (Q) des Vibrationsaufbaus (10) unter Benutzung des Leistungseingangs bei Resonanz bestimmt; es wird der piezo-elektrische Ladungskoeffizient ($\beta$) des Vibrationsaufbaus (10) bestimmt; es wird unter Benutzung des Gütefaktors (Q) und des piezo-elektrischen Ladungskoeffizienten ($\beta$) der Skalierungsfaktor bestimmt; es wird die Größe einer sekundären Vibrationsmode ($S_p$) gemessen und es werden der Skalierungsfaktor und die Größe einer sekundären Vibrationsmode ($S_p$) benutzt, um die Drehrate ($\Omega$) des Sensors zu bestimmen.

2. Verfahren nach Anspruch 1, bei welchem die Vibrationsgröße an den Primärabnahmepunkt ($P_p$) durch Überwachung der Signalspannungs-Amplitude in einem Vibrationsmonitor (12, 15) überwacht wird.

3. Verfahren nach Anspruch 2, bei welchem die Signalspannungs-Amplitude im Vibrationsmonitor (12, 15) mit einer vorbestimmten Spannung (Vref1) als Bezugsspannung verglichen wird.

4. Verfahren nach Anspruch 3, bei welchem die Größe der Vibration am Primärtreiberpunkt durch Änderung der Spannungsamplitude des Signals verändert wird, das der Vibrationseinrichtung (11, 17) am Primärtreiberpunkt zugeführt wird.

5. Verfahren nach Anspruch 1, bei welchem der Schritt zur Bestimmung des Skalierungsfaktors (SF) des Sensors die Benutzung der folgenden Gleichung umfaßt:

$$\text{Skalierungsfaktor} = S_p/\Omega = AP_d\,\beta_{11}\,\beta_{14}\,(Q/Wn)^2 k$$

Dabei sind A und k Konstante, $S_p$ ist die Größe der Sekundärvibrationsmode, $\Omega$ ist die aufgeprägte Drehrate, $P_d$ ist die Treiberspannungsamplitude, Q ist der Gütefaktor des Vibrationsaufbaus (10), W ist die natürliche Resonanzfrequenz und $\beta_{11}$ und $\beta_{14}$ sind die piezo-elektrischen Ladungskoeffizienten an den Elektroden 11 bzw. 14.

6. Piezo-elektrischer Vibrations-Drehratensensor, welcher folgende Teile umfaßt:
einen Vibrationsaufbau (10);
eine Vibrationseinrichtung (11, 17), um den Aufbau (10) an einem primären Antriebspunkt ($P_d$) hiervon in Vibration zu versetzen;
eine Vibrations-Überwachungseinrichtung (12, 15), um eine Größe der Vibration an einem Primärabnahmepunkt ($P_p$) am Ratenaufbau (10) zu überwachen, und
eine Amplituden-Aufrechterhaltungs-Einrichtung (32), um die Größe der Vibration am Primärantriebspunkt so zu verändern, daß eine

Vibrationsamplitude am Primärabnahmepunkt ($P_p$) im wesentlichen konstant gehalten wird, gekennzeichnet durch die folgenden Mittel:
eine Resonanz-Frequenz-Meßeinrichtung (40) zur Messung einer natürlichen Resonanzfrequenz ($W_n$) des Aufbaus (10);
eine Primär-Treiberelektrodenstrom-Meßeinrichtung zur Überwachung eines Treiberstroms (($i_d$) nach der Vibrations-Primär-Treiberelektrode (11, 17) bei Resonanz;
eine Primär-Treiberelektroden-Spannungs-Meßeinrichtung (38) zur Überwachung einer Treiberspannungsamplitude ($P_d$) nach den Vibrations-Primär-Treiberelektroden (11, 17) bei Resonanz;
eine Leistungs-Eingangsbestimmungs-Vorrichtung (50) zur Bestimmung der Eingangsleistung bei Resonanz aus dem gemessen Primär-Treiberelektrodenstrom ($i_d$) und der Spannungsamplitude ($P_d$) bei ihrer natürlichen Resonanzfrequenz ($W_n$);
Mittel (52) zur Bestimmung des Gütefaktors des Vibrationsaufbaus (10) aus der Eingangsleistung bei Resonanz;
Mittel (54) zur Bestimmung des piezo-elektrischen Ladungskoeffizienten ($\beta$) des Vibrationsaufbaus (10);
eine Skalierungsfaktor-Bestimmungsvorrichtung zur Bestimmung des Skalierungsfaktors, der sich mit der Temperatur und Zeit ändert unter Benutzung des Gütefaktors und des piezo-elektrischen Ladungskoeffizienten ($\beta$);
Mittel zur Messung der Größe des sekundären Vibrationsmodus; und
Mittel, die den Skalierungsfaktor und die Größe eines Sekundär-Vibrationsmodus benutzen, um die Drehrate ($\Omega$) des Sensors zu bestimmen.

7. Piezo-elektrischer Vibrationsratensensor nach Anspruch 6, bei welchem die Mittel (32) zur Aufrechterhaltung der Amplitude einen Amplitudendetektor (34) aufweisen, um die Amplitude der Vibration am Abnahmepunkt ($P_p$) zu erfassen und ein Komparator (36) die erfaßte Amplitude mit einem Bezugsamplitudenwert (Vref1) vergleicht und Mittel (37) vorgesehen sind, um den Ausgang der Vibrationseinrichtung (11, 17) so zu verändern, daß die Größe der Vibration am Primär-Treiberpunkt ($P_d$) geändert wird, um die Vibrationsgröße am Primär-Abnahmepunkt ($P_p$) im wesentlichen konstant zu halten.

8. Piezo-elektrischer Vibrationsratensenor nach Anspruch 7, bei welchem der Amplitudendetektor (34) einen Spannungsmesser aufweist, um die Spannung im Vibrationsmonitor (12, 15) zu messen, wobei der Bezugsspannungswert (Vref1) ein Spannungswert ist und der Komparator (36) Mittel aufweist, um die Spannung im Vibrationsmonitor (12, 15) und die Bezugsspannung (Vref1) zu vergleichen, und wobei die Mittel (37) zur Veränderung des Ausgangs der Vibrationsvorrichtung (11, 17) eine Einrichtung umfassen, um das Signalspannungs-Signal zu verändern, das der Vibrationseinrichtung zugeführt wird.

9. Piezo-elektrischer Vibrationsratensensor nach Anspruch 8, bei welchem die Mittel (37) zur Veränderung der Signalspannungs-Amplitude, die der Vibrationseinrichtung (11, 17) zugeführt wird, eine Verstärkungssteuereinrichtung umfassen.

## Revendications

1. Procédé de détermination du facteur d'échelle d'un capteur piézoélectrique de vitesse pour une compensation du facteur d'échelle, comprenant des étapes d'activation d'un moyen de vibration (11, 17) de façon à stimuler les vibrations d'une structure vibrante (10) sur un premier point d'attaque ($P_d$); de contrôle de l'amplitude des vibrations sur le point de prélèvement primaire ($P_p$) de ladite structure (10); de comparaison de l'amplitude des vibrations sur le point de prélèvement primaire ($P_p$) avec une valeur de référence ($V_{ref1}$) et de variation de l'amplitude des vibrations sur le point d'attaque primaire ($P_d$) de façon à maintenir l'amplitude des vibrations sur le point de prélèvement primaire ($P_p$) à un niveau pratiquement constant;

procédé caractérisé par la mesure d'une fréquence de résonnance naturelle ($W_n$) de ladite structure vibrante (10), le contrôle d'un courant d'attaque (Id) et d'une amplitude de tension d'attaque ($P_\alpha$) dudit moyen de vibration (11, 17) à la résonnance, la détermination d'une entrée de puissance de ladite structure vibrante (10) à la résonnance à partir dudit courant d'attaque (Id) et de ladite amplitude de tension d'attaque ($P_\alpha$) contrôlés à ladite fréquence de résonnance naturelle ($W_n$), la détermination du facteur Q (Q) de la structure vibrante (10) à l'aide de l'entrée de puissance à la résonnance, la détermination du coefficient de charge piézoélectrique ($\beta$) de la structure vibrante (10), la détermination du facteur d'échelle à l'aide desdits facteur Q (Q) et coefficient de charge piézoélectrique ($\beta$), la mesure de l'amplitude d'un mode secondaire de vibration (Sp) et l'utilisation du facteur d'échelle et de l'amplitude d'un mode secondaire de vibration (Sp) pour déterminer la vitesse de rotation ($\Omega$) du capteur.

2. Procédé selon la revendication 1, selon lequel l'amplitude des vibrations sur le point de prélèvement primaire ($P_p$) est contrôlée par contrôle de l'amplitude de la tension de signal dans un moyen de contrôle des vibrations (12, 15).

3. Procédé selon la revendication 2, selon lequel l'amplitude de tension du signal dans le moyen de contrôle des vibrations (12, 15) est comparée à une tension prédéterminée ($V_{ref1}$) comme ladite valeur de référence.

4. Procédé selon la revendication 3, selon lequel l'amplitude des vibrations sur le point d'attaque primaire est modifiée par modification de l'amplitude de tension du signal fourni au moyen de vibration (11, 17) sur le point d'attaque primaire.

5. Procédé selon la revendication 1, comprenant une étape de détermination du facteur d'échelle (SF) du capteur à l'aide de l'équation suivante :

Facteur d'échelle = $Sp/\Omega = A \, Pd \, \beta_{11} \, \beta_{14} (Q/W_n)^2 k$

où A et k sont des constantes, Sp est l'amplitude du mode secondaire de vibration, $\Omega$ est la vitesse de rotation appliquée, $P_d$ est l'amplitude de la tension d'attaque, Q est le facteur Q de la structure vibrante (10), $W_n$ est la fréquence de résonnance naturelle et $\beta_{11}$ et $\beta_{14}$ sont les coefficients de charge piézoélectrique sur les électrodes respectives 11 et 14.

6. Capteur piézoélectrique de taux de vibration comprenant :
   - une structure vibrante (10);
   - un moyen de vibration (11, 17) pour faire vibrer ladite structure vibrante (10) sur un point d'attaque primaire ($P_d$);
   - un moyen de contrôle des vibrations (12, 15) pour contrôler une amplitude de vibration sur un point de prélèvement primaire ($P_p$) sur ladite structure vibrante (10); et
   - un moyen de maintien de l'amplitude (32) prévu pour faire varier l'amplitude des vibrations sur le point d'attaque primaire de façon à maintenir une amplitude des vibrations sur ledit point de prélèvement primaire ($P_p$) à un niveau pratiquement constant;

capteur caractérisé par:

- un moyen de mesure de fréquence de résonnance naturelle (40) pour la mesure d'une fréquence de résonnance naturelle ($W_n$) de ladite structure vibrante (10);
- un moyen de mesure du courant d'électrode d'attaque primaire pour contrôler un courant d'attaque (Id) sur lesdites électrodes d'attaque primaire de moyen de vibration (11, 17) à la résonnance;
- un moyen de mesure de tension d'électrode d'attaque primaire (38) pour contrôler une amplitude de tension d'attaque ($P_d$) sur lesdites électrodes d'attaque primaire du moyen de vibration (11, 17) à la résonnance;
- un moyen de détermination d'entrée de puissance (50) pour déterminer la puissance d'entrée à la résonnance à partir du courant mesuré d'électrode d'attaque primaire (Id) et de l'amplitude de tension ($P_d$) à ladite fréquence de résonnance naturelle ($W_n$);
- un moyen (52) pour déterminer le facteur Q de la structure vibrante (10) à partir de ladite puissance d'entrée à la résonnance;
- un moyen (54) pour déterminer le coefficient de charge piézoélectrique ($\beta$) de la structure vibrante (10);
- un moyen de détermination du facteur d'échelle pour déterminer le facteur d'échelle variant avec la température et le temps à l'aide dudit facteur Q et dudit coefficient de charge piézoélectrique ($\beta$);
- un moyen de mesure de l'amplitude d'un mode secondaire de vibration; et
- un moyen utilisant le facteur d'échelle et l'amplitude du mode secondaire de vibration pour déterminer la vitesse de rotation ($\Omega$) du capteur.

7. Capteur piézoélectrique de taux de vibration selon la revendication 8 ou 9, dans lequel le moyen de maintien d'amplitude (32) comprend un moyen de détection d'amplitude (34) pour détecter l'amplitude des vibrations sur le point de prélèvement primaire ($P_p$), un moyen de comparateur (36) pour comparer l'amplitude détectée à une valeur d'amplitude de référence ($V_{ref1}$) et un moyen (37) pour faire varier la sortie du moyen de vibration (11, 17) de façon à modifier l'amplitude des vibrations sur le point d'attaque primaire ($P_d$) de façon à maintenir l'amplitude des vibrations sur le point de prélèvement primaire ($P_p$) à un niveau pratiquement constant.

8. Capteur piézoélectrique de taux de vibration selon la revendication 10, dans lequel le moyen de détection d'amplitude (34) comprend un moyen de mesure de tension pour mesurer la tension dans le moyen de contrôle des vibrations (12, 15); la valeur d'amplitude de référence ($V_{ref1}$) est une valeur de tension; le moyen de comparateur (36) comprend un moyen pour comparer la tension dans le moyen de contrôle des vibrations (12, 15) et la tension de référence ($V_{ref1}$); et le moyen (37) pour faire varier la sortie du moyen de vibration (11, 17) comprend un moyen pour modifier le signal de tension de signal passant dans le moyen de vibration.

9. Capteur piézoélectrique de taux de vibration selon la revendication 11, dans lequel le moyen (37) pour faire varier l'amplitude de tension de signal passant dans le moyen de vibration (11, 17) comprend un dispositif de commande du gain.

# Fig.1.

# Fig.2.

Fig. 3.

12

Fig.4.

EP 0 492 739 B1